# EUROPEAN PATENT APPLICATION

(11) **EP 2 594 912 A1**
(43) Date of publication of application: **22.05.2013**
(21) Application number: 11400053.2
(22) Date of filing: 21.11.2011
(51) Int. Cl.: G01H 1/00

(54) **Detection system for detection of damages on rotating components of aircraft and method of operating such a detection system**

(71) Applicant: Eurocopter Deutschland GmbH, 86609 Donauwörth (DE)
(72) Inventor: Kreitmair-Steck, Wolfgang, 85521 Ottobrun (DE)
(74) Representative: Schmid, Rudolf

(57) **Abstract**

A detection system for detection of damages on at least one rotating component (10, 20, 30 ... N) of an air vehicle caused by at least one solid, comprising measuring means (S1, S2, S3 ... Sn) for measuring vibration'and/or sound of said rotating components (10, 20, 30 ... N) of the air vehicle, in order to acquire the time signal of vibration and/or sound of any of said rotating components (10, 20, 30 ... N), and processing means (PRO) for comparing said measured vibration and/or sound with a maximum value or an envelope of standard vibration and/or sound stored in a memory (EM1, EM2, ... EMn) and warning means (WS) for issuing a warning signal in/to the air vehicle when the measured vibration and/or sound exceeds said standard vibration and/or sound. The air vehicle is a manned or unmanned propeller airplane or a manned or unmanned helicopter, the at least one solid is a projectile, stones, ice-crystals or bird strike, the measuring means are vibration sensors (S1, S2, S3 ... Sn) at bearings of a propeller or a rotor drive and/or acoustic sensors (S1, S2, S3 ... Sn) at an upper area of the wings of a propeller airplane or the helicopter's fuselage and/or acoustic sensors (S1, S2, S3 ... Sn) at the tail boom and/or vibration sensors (S1, S2, S3 ... Sn) at an engine casing or acoustic sensors (S1, S2, S3 ... Sn) at a cowling of the aircraft, the reference maximum value/envelope is related to/dependent on relevant actual flight parameter values.

## Description

The invention relates to a detection system for detection of damages on rotating components according to the features of the preamble of claim 1 and to a method of operating such a detection system according to the features of the preamble of claim 6.

Hits through bullets in propellers of a propeller aircraft and in main or tail rotors of a helicopter lead directly to damages that in many times cause a total loss of the aircraft in a very short time. If said damages are discovered as early as possible there may still be some options left to avoid said total loss by taking countermeasures such as trying to rapidly land the aircraft. As propeller aircraft and helicopters in operation on a flight mission tend to be loud with a plurality of vibrations acting on its pilot(s) any damage due to a hit of one of the propellers or either the main or tail rotor may escape the immediate attention of the pilot(s) and precious time for still safely landing the damaged aircraft may be lost. The automatic detection of damages is even more important for unmanned aircraft where the pilot/operator/controller of the aircraft is far away from the vehicle without the possibility of acoustic or vibration sensing and only connected to the aircraft by datalink.

The document US 4P30240 A discloses for use in predicting machine failure a transducer sensor, such as piezoelectric crystal, being applied to a machine for sensing machine motion and structure borne sound, including vibration friction, and shock waves. The structure borne sound and motion sensed is converted to electrical signals which are filtered to leave only the friction and shock waves, which waves are processed, as by detecting the envelope and integrating beneath the envelope, resulting in a measure of friction and shock wave energy. This measure may be compared with that of a less used machine, say the same machine when new, to indicate the rise in energy due to change in machine parts.

The document WO 03/023721 A2 relates to a device and a method for the early recognition and prediction of unit damage in machine plants, in particular mobile machine plants. The structural noise of the machine plant is thus recorded by a sensor, transmitted as an acceleration signal and analysed in a digital signal processor (DSP). In order to inhibit negative influences from environmental vibrations or structural sound waves which are nothing to do with the status of the machine plant, the acceleration signal is firstly transformed into the frequency domain by means of a fast Fourier transformation and the data thus obtained is then transformed back into the time domain by means of a cepstrum analysis, such that resonance data from single shock impulses (a cepstrum) are obtained in the time domain.; Said cepstrum is then compared with a comparative cepstrum, available in a memory unit corresponding to load and speed signals for the current operating status for a new machine plant. On exceeding threshold values the diagnostic signal, in particular information about the unit diagnosed as being damaged and the predicted remaining service life thereof is displayed for the user and an emergency operation initiated.

The document US 6,918,747 B2 relates to detecting damage to the rotor of an aircraft engine that includes means for measuring vibration and speed in order to acquire data relating to the speed of the rotor and also to the amplitude and the phase of rotor vibration during a determined flight. The method comprises the following steps: reading said acquired data; calculating a mean vibration vector over a determined rotor speed range on the basis of said acquired data; calculating a vector difference between the mean vibration vector of said determined flight and the mean vibration vector of a reference flight for said rotor speed range; comparing the modulus of said vector difference with a predetermined threshold value; and issuing a warning signal when the modulus of said vector difference exceeds said predetermined threshold value, said steps being performed after said determined flight has been completed.

The document US 6,386,038 B1 discloses at least one acoustic sensor, a mapping unit, a controller, and a transducer for acoustic inspection of an object such as an exterior panel of an aircraft, rocket or other vehicle. The sensor is directly coupled to the object to be inspected for damage, e. g. damage by impact with another object, and generates a sensed signal based on acoustic signal occurring in the object under an applied load, which signal may or may not be the sound of damage occurring in the object. The mapping unit is coupled to receive the sensed signal from the sensor, and generates damage data based thereon. If the damage data resulting from the induced acoustic signal indicates that the object has incurred actual damage, the controller can generate an alarm, a display of the damage, and/or store the damage data in a memory to provide a record of damage incurred by the object.

The methods of the state of the art described above have only limited applicability for rotating parts of air vehicles as e.g. propeller airplanes or helicopters, because the rotating parts generate different sound and vibration levels for different flight manoeuvres or flight states. Without considering the dependency on such parameters, the comparison with a standard maximum value or a standard envelope is not reliable and will result in many late or even erroneous alarms to the crew. The combination of a number of flight parameters such as airspeed, vertical speed, altitude etc. can be considered to be representative of the flight manoeuvres, resp. flight states.

The objective of the invention is directed to the reliable detection of damages on propellers of propeller airplanes and main and/or tail rotors and/or a tail rotor drive shaft of a helicopter, if said damages are caused by projectiles, stones, ice-crystals or bird strike. The objective of the invention is further directed to a method of operating such a detection system.

The solution is provided with a detection system for detection of damages caused by projectiles, stones, ice-crystals or bird strike according to the features of claim 1 and with a method of operating such a detection system according to the features of claim 6.

According to the invention a detection system for detection of damages on at least one rotating component of an air vehicle, caused by at least one solid, comprises measuring means for measuring vibration and/or sound of said rotating components of the air vehicle, in order to acquire data related to the amplitude versus time of vibration and/or sound caused by any of said rotating components.

The inventive detection system further comprises processing means for comparing said measured vibration and/or sound signal with maximum amplitude values and/or frequency envelopes of standard vibration and/or sound as function values for the specific flight parameters.

These functions have been recorded during operational use of a certain helicopter type, analysed and stored in a memory device during a general extensive recording period with a certain helicopter fleet. By copying these functions into the individual memory device of the inventive detection system of the individual helicopters of this type, the functions become accessible by the said processing means,

In addition, the inventive detection system includes warning means for issuing a warning signal in/to the air vehicle when the measured vibration and/or sound signals exceeds said flight parameter specific standard vibration and/or sound signals.

The comparison can be performed on the basis of the amplitudes of the time signal directly and/or on the basis of a frequency analysis, preferably after Fast Fourier Transformation of the signal. In the later case, the comparison is performed by comparison with the individual values of the corresponding envelope function.

According to the invention the air vehicle is a propeller airplane or a helicopter and the at least one solid is a projectile, stones, ice-crystals or bird strike. The measuring means are vibration sensors at bearings of the propellers or the main and/or tail rotor drive and/or acoustic sensors, i.e. microphones at an upper area of the wings of a propeller airplane or of a helicopter's fuselage and/or acoustic sensors at the tail boom and/or vibration sensors at an engine casing or acoustic sensors at a cowling of the helicopter. The inventive detection system allows detection of damages of said rotating components of the aircraft caused by e. g. military fire. The inventive detection system allows by the means of the acoustic sensors as well detection of the military fire itself. Any hits of said rotating components cause imbalances and consequent vibrations and/or sound that are measured to acquire data related to the amplitude of vibration and/or sound of any of said rotating components.

The acoustic sensors, i.e. microphones, need to be sensitive to acoustic signals in the range of less than 1kHz up to more than 10kHz. The vibration and acoustic sensors should be fixed on the aircraft in the close environment of the component to be monitored. The sampling rates for the vibration and acoustic signals have to be sufficient high in order to satisfy the Nyquist criterion, i.e. more than 2 times the highest frequency of interest.

Given certain flight parameters values, e.g. airspeed, vertical speed etc., said acquired data are fed into processing means for comparing said measured vibration and/or sound with the respective envelope of standard vibration and/or sound stored for this flight state, i.e. set of flight parameter values, in a memory and a warning signal is issued when the measured vibration and/or sound exceeds said standard vibration and/or sound. The quality of said measured vibration and/or sound due to damages consequent to military fire, stones, ice-crystals or bird strike allows simple sensors, simple processing means and a simple set of envelopes of standard vibration and/or sound stored and thus allows quick and efficient processing of said measured vibration and/or sound to issue reliable warning signals to the pilots to allow them to rapidly start with emergency reactions to safe the aircraft as such.

According to a preferred embodiment of the invention overall 4-5 sensors are applied at the said components of the aircraft, particularly 2-3 vibration sensors and 2-3 acoustic sensors.

According to a further preferred embodiment of the invention a aircraft's universal damage management system (UDMS) is provided and any of the measuring means, processing means and/or warning means are integrated into said aircraft's UDMS.

According to a preferred embodiment of the invention a method is proposed for operating a detection system for detection of damages on rotating components of an air vehicle, caused by solids, with the following steps:
- measuring vibration and/or sound of said rotating components of the air vehicle in order to acquire data related to the amplitude of propeller/rotor vibration,
- recovering the respective at least one maximum value/envelope of standard vibration and/or sound levels for the relevant actual flight parameter values, e.g. airspeed, vertical speed etc., from the memory,
- comparing by means of processing means said measured vibration and/or sound with the respective recovered at least one maximum value/envelope of vibration and/or sound,
- issuing a warning signal in/to the air vehicle when the measured vibration and/or sound exceeds the respective at least one maximum value/envelope values,

A preferred embodiment of the invention will be described with reference to the following description and the attached drawings.
Fig. 1 shows a flow chart for the detection of damages according to the invention,
Fig. 2 shows a schematic view of the detection system according to the invention,
Fig. 3 shows a schematic view of a processor of the detection system according to the invention,
Fig. 4a shows an example of a 2 dimensional matrix of signal values (for use as reference maximum values),
Fig.4b displays the 2-dimensional matrix of Fig. 4a in a graph, and
Fig. 4c shows a sample frequency envelope of the detection system according to the invention for certain values P1,..., Pm of the relevant flight parameters.

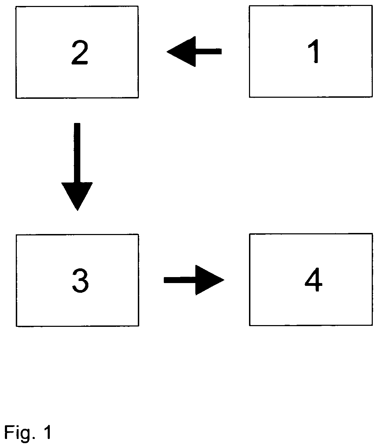

According to Fig. 1 a rotating component of an aircraft (not shown) is hit by projectiles, stones, ice crystals or birds etc. at step 1. Said hit is followed by damage of the rotating component at step 2. The damage of the rotating component results in imbalances of the damaged rotating component and thus enhanced vibrations and/or enhanced sound at step 3 relative to vibrations and/or sound of said rotating component during standard operation. The enhanced vibrations and/or enhanced sound and thus the corresponding damage of the rotating component are detected at step 4 by comparing the signals detected real time with an associated maximum value or envelope of said rotating component in an undamaged condition derived for the aircraft type for corresponding flight parameters values.

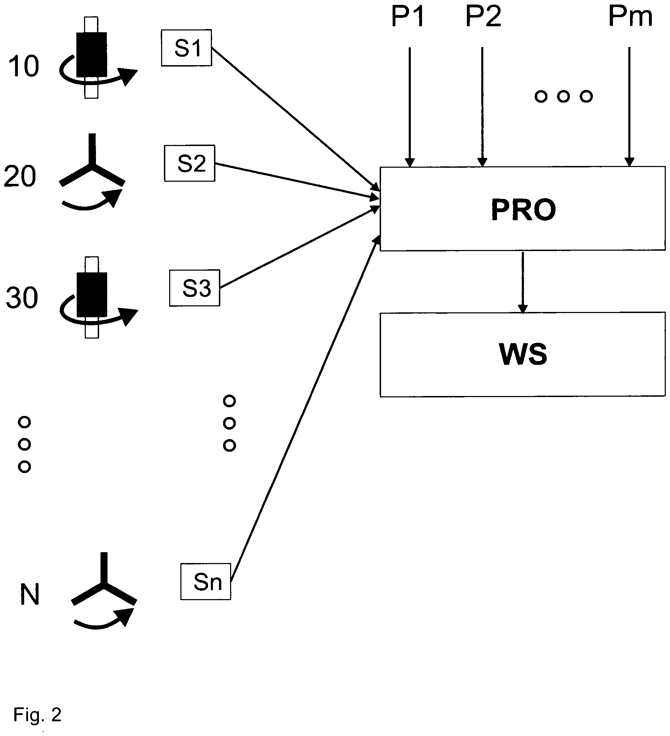

According to Fig. 2 a detection system for damages comprises measuring means, namely sensors S1, S2, S3, ... Sn that are mounted next to or at the rotating components10, 20, 30, ... N of the helicopter, said rotating components 10, 20, 30, ... N being e. g. a rotating bearing, a propeller of an airplane, a tail rotor, a drive shaft and a main rotor of a helicopter.

The sensors S1, S2, S3, ... Sn are conceived to detect vibrations directly by means of vibration sensors or indirectly by means of acoustic sensors. Thus any of the sensors S2, ... Sn next to propellers or rotors 20, ..., N is an acoustic sensor, while any of the sensors S1, S3 next to a drive shaft or a bearing 10, 30, ... of the aircraft is a vibrations sensor.

The sensors S1, S2, S3, ... Sn are adapted to acquire real time signal data related to the respective amplitudes of vibration and/or sound of any of said rotating components 10, 20, 30 ... N during operation.

The sensors S1, S2, S3, ... Sn are connected to processing means PRO. The signal data acquired real time by the sensors S1, S2, S3, ... Sn and related to the vibration and/or sound of said rotating components 10, 20, 30, ... N are transferred to the processing means PRO for comparison with the maximum values or envelopes corresponding to the actual flight parameters values of each monitored rotating component. These maximum values/envelopes are derived for the specific aircraft type during operation of said rotating component in an undamaged condition and stored in the processing means PRO of the detection system.

There are different maximum values/envelopes stored in the processing means PRO associated to specific flight parameter values of the aircraft, said different maximum values/envelopes taking into account that different revolutions/minute and different loads result in different frequency spectra. If the processing means PRO recognizes that an amplitude of vibration and/or sound of said rotating components 10, 20, 30, ... N are beyond the values of the associated maximum value(s)/envelope(s) a warning information is given to a warning system WS of the aircraft.

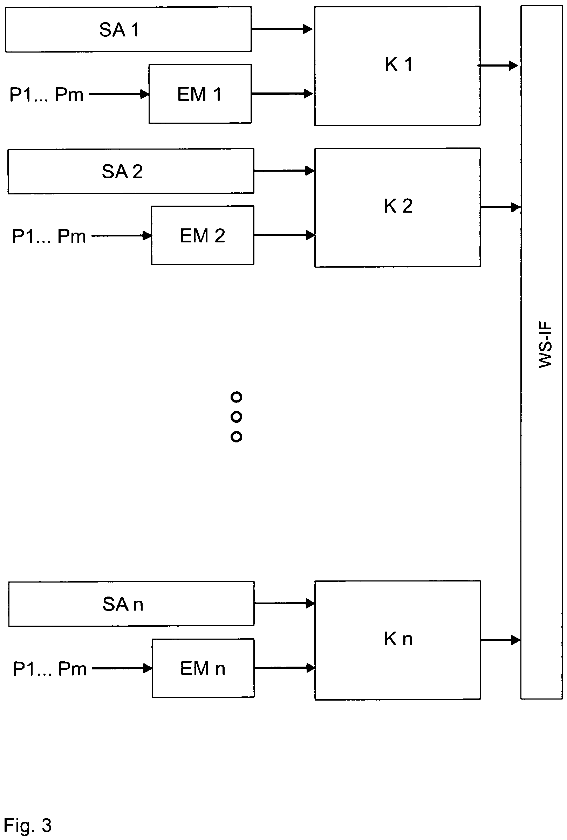

According to Fig. 3 corresponding features are referred to with the references of Fig. 2. The processing means PRO comprises a signal analyser SA1 for the data acquired real time by the sensor S1 mounted to the rotating component 10. The processing means PRO further comprises a maximum value/envelope memory EM1 associated to the data acquired real time by the sensor S1. The signal analyser SA1 and the associated maximum value/envelope memory EM1 are linked in parallel to a comparator K1. The processing means PRO further comprises a signal analyser SA2 for the data acquired real time by the sensor S2 mounted to the rotating component 20 and a maximum value/envelope memory EM2 associated to the data acquired real time by the sensor S2. The signal analyser SA2 and the associated maximum value/envelope memory EM2 are linked in parallel to a comparator K2. The processing means PRO further comprises a plurality of signal analysers till up to signal analyser SAn for the data acquired real time by a plurality of sensors till up to the sensor Sn mounted to the rotating component N and a plurality of maximum value/envelope memories till up to the maximum value/envelope memory EMn associated to the data acquired real time by the sensor Sn. The plurality of signal analysers till up to the signal analyser SAn and the plurality of maximum value/envelope memories till up to the envelope memory EMn are respectively pairwise linked in parallel to a plurality of respective comparators till up to the comparator Kn. The respective comparators K1, K2, ... till up to the comparator Kn each have an interface WS-IF to the warning system WS.

A warning information is given to the warning system WS via the interface WS-IF if any of the comparators K1, K2, ... Kn recognize that at least one amplitude of vibration and/or sound from any of the associated signal analysers SA1, SA2 ... SAn is beyond the values of the maximum value/envelope(s) in the associated envelope memories EM1, EM2, ... EMn. The warning system WS gives the information to the pilot(s) in the cockpit of the aircraft or sends a respective message via data link to the distant aircraft operator/pilot/controller.

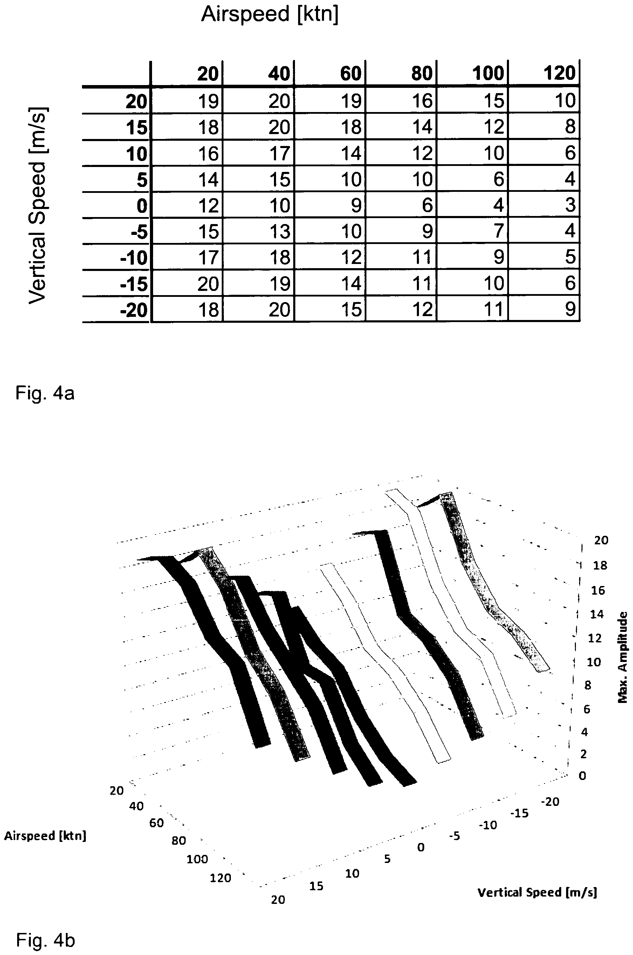

Fig. 4a shows an example of a 2-dimensional matrix of signal values, for use as reference maximum values, based on the two flight parameters airspeed and vertical speed.

Fig 4b displays the 2-dimensional matrix of Fig. 4a in a graph.

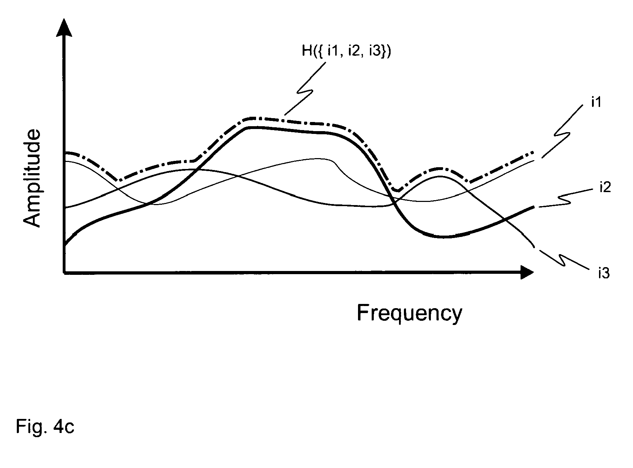

According to Fig. 4c three frequency spectra i1, i2 and i3 are shown that are derived during standard operation of a rotating component in an undamaged condition with a sensor i being associated to said rotating component. Frequency spectrum i1 corresponds to signals from said sensor i transmitted in a first load situation while frequency spectrum i2 corresponds to signals from said sensor i transmitted in a second load situation and frequency spectrum i3 corresponds to signals transmitted from said sensor i in a third load situation of said undamaged rotating component attached to said sensor i. An envelope H({i1, i2, i3}) for said three frequency spectra i1, i2 and i3 derived during standard operation of said rotating component in an undamaged condition has always a higher amplitude with respect to any associated frequency than any of the three frequency spectra i1, i2 and i3. The envelope H({i1, i2, i3}) is used as a reference envelope for a specific combination of flight parameter values P1, ..., Pm.

## Claims

1. A detection system for detection of damages on at least one rotating component(10, 20, 30 ... N) of an air vehicle caused by at least one solid, comprising measuring means (S1, S2, S3 ... Sn) for measuring vibration and/or sound of said rotating components (10, 20, 30 ... N) of the air vehicle, in order to acquire data related to the amplitude versus time of vibration and/or sound of any of said rotating components (10, 20, 30 ... N), and processing means (PRO) for comparing said measured vibration and/or sound with at least one maximum value or an envelope of standard vibration and/or sound stored in a memory (EM1, EM2, ... EMn) and warning means (WS) for issuing a warning signal in/to the air vehicle when the measured vibration and/or sound exceeds said standard vibration and/or sound,
**characterized in that** the air vehicle is a propeller airplane or a helicopter, the at least one solid is a projectile, stones, ice-crystals or bird strike, the measuring means are vibration sensors (S1, S2, S3 ... Sn) at bearings of a propeller or a rotor drive and/or acoustic sensors (S1, S2, S3 ... Sn) at an upper area of the wings of a propeller airplane or the helicopter's fuselage and/or acoustic sensors (S1, S2, S3 ... Sn) at the tail boom and/or vibration sensors (S1, S2, S3 ... Sn) at an engine casing or acoustic sensors (S1, S2, S3 ... Sn) at a cowling of the aircraft, the reference maximum value/envelope is related to/dependent on relevant actual flight parameter values.

2. The detection system according to claim 1,
**characterized in that** the set of relevant actual flight parameter values comprises the airspeed value.

3. The detection system according to claim 1 or 2, **characterized in that** the set of relevant actual flight parameter values comprises the vertical speed value

4. The detection system according to claim 1, 2 or 3,
**characterized in that** overall 4-5 sensors are applied, particularly 2-3 vibration sensors and 2-3 acoustic sensors.

5. The detection system according to claim 1, 2 or 3,
**characterized in that** an aircraft's universal damage management system is provided and that any of the measuring means (S1, S2, S3 ... Sn), processing means (PRO) and/or warning means (WS) are integrated into said aircraft's universal damage management system.

6. A method for operating a detection system according to any of the preceding claims for detection of damages on rotating components of an air vehicle, caused by solids, with the following steps:
- measuring vibration and/or sound of said rotating components of the air vehicle in order to acquire data related to the amplitude of propeller/rotor vibration,
- recovering the respective at least one maximum value/envelope of standard vibration and/or sound levels for the relevant actual flight parameter values, e.g. airspeed, vertical speed etc., from the memory,
- comparing by means of processing means said measured vibration and/or sound with the respective recovered at least one maximum value/envelope of vibration and/or sound,
- issuing a warning signal in/to the air vehicle when the measured vibration and/or sound exceeds the respective at least one maximum value/envelope values,

7. The method according to claim 6,
**characterized in that** for at least one sensor signal the comparison is performed between the amplitudes of the measured signal and a pre-stored maximum value for the respective sensor.

8. The method according to claim 6,
**characterized in that** for at least one sensor signal a Fast Fourier Transformation (FFT) is performed on the measured signal and the frequency spectrum is compared to the pre-stored envelope frequency spectrum value for the respective sensor.
